# EUROPEAN PATENT APPLICATION

(11) **EP 4 790 650 A2**
(43) Date of publication of application: **12.08.2026**
(21) Application number: 26157075.8
(22) Date of filing: 06.02.2026
(51) Int. Cl.: G06T 17/00, G06T 13/40

(54) **METHOD, APPARATUS, DEVICE AND STORAGE MEDIUM FOR GENERATING SKELETON DATA**

(30) Priority: 08.02.2025 CN 202510142573
(71) Applicant: Bytedance Technology Ltd., KY1 - 1205 Grand Cayman Cayman Islands (KY); Beijing Zitiao Network Technology Co., Ltd., Beijing 100190 (CN)
(72) Inventor: SONG, Chaoyue, 018960 Singapore (SG); ZHANG, Jianfeng, 018960 Singapore (SG); FENG, Jiashi, 018960 Singapore (SG); LI, Xiu, Beijing 100028 (CN); YANG, Fan, 018960 Singapore (SG); XU, Zhongcong, 018960 Singapore (SG); LIEW, Jun Hao, 018960 Singapore (SG); GUO, Xiaoyang, Beijing 100028 (CN)
(74) Representative: Marks & Clerk LLP

(57) **Abstract**

Embodiments of the present disclosure relate to a method, an apparatus, a device, and a computer-readable storage medium for generating skeleton data. The method (200) proposed herein includes: sampling (210), based on shape data of an object, a plurality of surface points of the object; generating (220) a set of shape units by encoding the plurality of surface points; providing (230) the set of shape units to a model to generate a set of skeleton units; and generating (240) skeleton data of the object based on the set of skeleton units, the skeleton data indicating a plurality of joint points of the object and a connection relationship between the plurality of joint points.

## Description

### TECHNICAL FIELD

Example embodiments of the present disclosure generally relate to the field of computers, and in particular, to a method, an apparatus, a device, and a computer-readable storage medium for generating skeleton data.

### BACKGROUND

With the development of computer technologies, there is an increasing demand for three-dimensional models capable of supporting animation in various fields, such as games, virtual reality (VR), augmented reality (AR), and robot simulation. Conventionally, driving a static three-dimensional model requires professionals to manually place skeleton, define joint structures, and configure skinning weights, which is not only time-consuming and labor-intensive, but also requires a large amount of expertise.

### SUMMARY

In a first aspect of the present disclosure, a method of generating skeleton data is provided. The method includes: sampling, based on shape data of an object, a plurality of surface points of the object; generating a set of shape units by encoding the plurality of surface points; providing the set of shape units to a model to generate a set of skeleton units; and generating skeleton data of the object based on the set of skeleton units, the skeleton data indicating a plurality of joint points of the object and a connection relationship between the plurality of joint points.

In a second aspect of the present disclosure, an apparatus for generating skeleton data is provided. The apparatus includes: a sampling module configured to sample, based on shape data of an object, a plurality of surface points of the object; an encoding module configured to generate a set of shape units by encoding the plurality of surface points; a processing module configured to provide the set of shape units to a model to generate a set of skeleton units; and a generation module configured to generate skeleton data of the object based on the set of skeleton units, the skeleton data indicating a plurality of joint points of the object and a connection relationship between the plurality of joint points.

In a third aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect.

In a fourth aspect of the present disclosure, a computer-readable storage medium is provided. The computer-readable storage medium has a computer program stored thereon which is executable by a processor to implement the method of the first aspect.

It would be appreciated that the content described in the Summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
Fig. 1 shows a schematic diagram of an example environment in which embodiments according to the present disclosure may be implemented;
Fig. 2 shows a flowchart of an example process of generating skeleton data according to some embodiments of the present disclosure;
Fig. 3 shows an example model for generating skeleton data according to some embodiments of the present disclosure;
Fig. 4 shows a schematic structural block diagram of an example apparatus for generating skeleton data according to some embodiments of the present disclosure; and
Fig. 5 shows a block diagram of an electronic device capable of implementing multiple embodiments of the present disclosure.

### DETAILED DESCRIPTION OF EMBODIMENTS

The embodiments of the present disclosure will be described in more detail below with reference to the drawings. Although certain embodiments of the present disclosure are shown in the drawings, it would be appreciated that the present disclosure may be implemented in various forms and should not be construed as being limited to the embodiments set forth herein. On the contrary, these embodiments are provided for a more thorough and complete understanding of the present disclosure. It would be appreciated that the drawings and embodiments of the present disclosure are only used for illustrative purposes, and are not used to limit the protection scope of the present disclosure.

It should be noted that the titles of any section/subsection provided herein are not restrictive. Various embodiments are described throughout this article, and any type of embodiments may be included under any section/subsection. In addition, the embodiments described in any section/subsection may be combined with any other embodiments described in the same section/subsection and/or different section/subsection in any manner.

In the description of the embodiments of the present disclosure, the term "include/comprise" and similar terms thereof should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other definitions, either explicit or implicit, may also be included below. The terms "first", "second", etc. may refer to different or same objects. Other definitions, either explicit or implicit, may also be included below.

The embodiments of the present disclosure may involve user's data, acquisition and/or use of data, and the like. These aspects all comply with corresponding laws, regulations, and related provisions. In the embodiments of the present disclosure, all data collection, acquisition, processing, machining, forwarding, and use are performed on the premise that the user is aware of and confirms. Accordingly, when implementing the embodiments of the present disclosure, the user should be informed of the type, range of use, use scenarios, etc. of the data or information that may be involved, and the authorization of the user should be obtained through appropriate means according to relevant laws and regulations. The specific manner of informing and/or authorizing may vary according to actual situations and application scenarios, and the scope of the present disclosure is not limited in this regard.

If the solutions in this specification and the embodiments involve personal information processing, the processing will be performed on the premise that there is a legal basis (for example, the consent of the personal information subject is obtained, or it is necessary to perform a contract, etc.), and the processing will only be performed within the scope of regulations or agreements. If the user refuses to process personal information other than the necessary information required for the basic functions, it will not affect the user's use of the basic functions.

Some traditional methods implement skeleton extraction by adapting a predefined skeleton template to an input shape. Although these methods may achieve good results on a specific category of characters, they are difficult to generalize on objects with diverse structural patterns. In addition, most of these methods rely on distance metrics between joints and vertices to predict skinning weights, which is prone to failure on shapes with complex topologies.

Other traditional methods do not rely on predefined skeleton templates, but generate the curve skeleton by extracting the medial axis or centerline of a mesh or point cloud. However, these methods tend to produce overly dense joints, which is not suitable for animation production.

The embodiments of the present disclosure provide a solution for generating skeleton data. The solution includes: sampling, based on shape data of an object, a plurality of surface points of the object; generating a set of shape units by encoding the plurality of surface points; providing the set of shape units to a model to generate a set of skeleton units; and generating skeleton data of the object based on the set of skeleton units, the skeleton data indicating a plurality of joint points of the object and a connection relationship between the plurality of joint points.

In this way, by predicting skeleton units based on shape data, the embodiments of the present disclosure may improve the accuracy and generalization ability of skeleton data generation, making it adaptable to diverse object categories.

Various example implementations of the solution will be described in detail below in further conjunction with the drawings.

### Example Environment

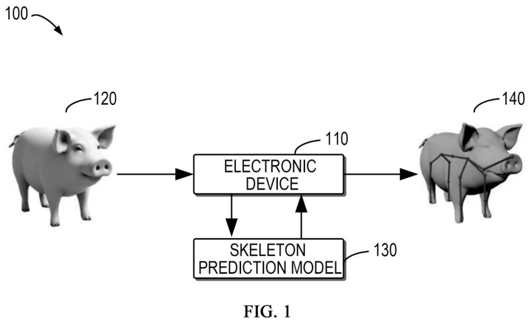

Fig. 1 shows a schematic diagram of an example environment 100 in which the embodiments of the present disclosure may be implemented. As shown in Fig. 1, the example environment 100 may include an electronic device 110.

As shown in Fig. 1, the electronic device 110 may acquire shape data 120 of an object (for example, the "little pig" shown in Fig. 1). As an example, the shape data 120 may be determined based on a three-dimensional model of the object to represent a three-dimensional shape of the object.

As will be described in detail below, the electronic device 110 may use a skeleton prediction model 130 to generate skeleton data 140 of the object (for example, the "little pig") based on the shape data 120.

In some examples, the skeleton data 140 may indicate a plurality of joint points in the object and a connection relationship between the joint points. For example, the connection relationship may indicate that there is a bone connection between two joint points.

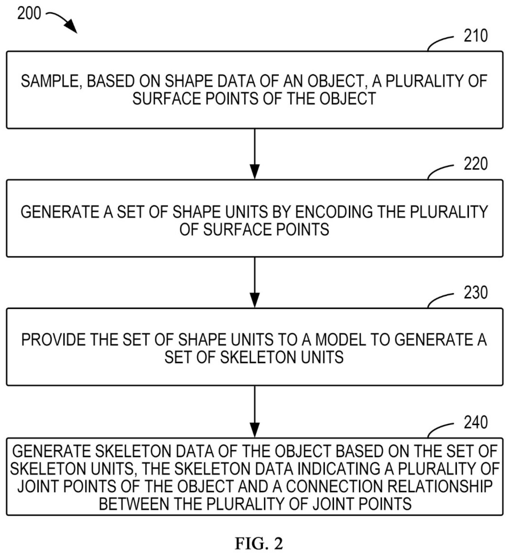

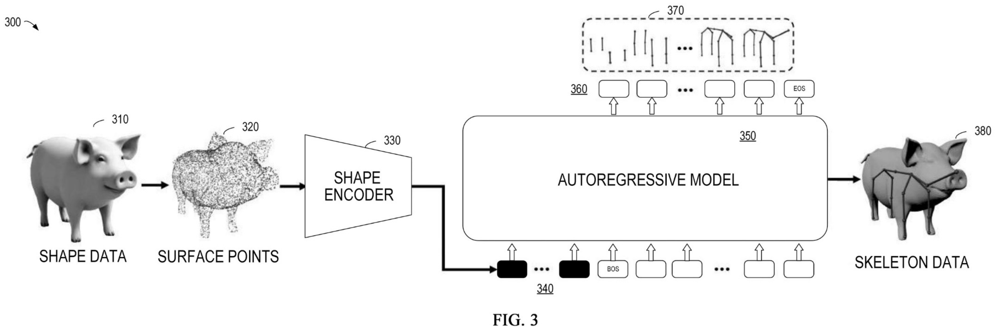

The specific implementation of the skeleton prediction model 130 will be described in detail below with reference to Fig. 2 and Fig. 3.

In some embodiments, the electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination thereof, including the accessories and peripherals of these devices or any combination thereof. In some embodiments, the electronic device 110 may also support any type of user-specific interface (such as "wearable" circuits, etc.).

It would be appreciated that the structure and function of each element in the environment 100 are described for illustrative purposes only, without suggesting any limitation to the scope of the present disclosure.

Some example embodiments of the present disclosure will be described below with continued reference to the drawings.

### Example Process

Fig. 2 shows a flowchart of an example process 200 of generating skeleton data according to some embodiments of the present disclosure. The process 200 may be implemented at the electronic device 110.

As shown in the figure, at block 210, the electronic device 110 samples, based on the shape data 120 of an object, a plurality of surface points of the object.

The specific process of generating skeleton data will be described below with reference to Fig. 3. Fig. 3 shows an example model for generating skeleton data according to some embodiments of the present disclosure.

As shown in Fig. 3, the electronic device 110 may acquire shape data 310 of the object. In some scenarios, the shape data 310 may be determined based on a three-dimensional model of the object. Specifically, the electronic device 110 may acquire the three-dimensional model of the object. As an example, such a three-dimensional model may include a preset model, or may be a three-dimensional model constructed based on user input information (for example, text or an image). For example, a generative model may be used to process the user input information (for example, the text or a two-dimensional image) to construct the three-dimensional model of the object.

Further, the electronic device 110 may determine three-dimensional mesh data of the object based on the three-dimensional model, to serve as the shape data of the object. As an example, 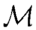 may represent the three-dimensional mesh data of the object. Accordingly, the skeleton data generation task may be expressed as: $p \left(S\left|M\right.\right) = p \left(J,B\left|M\right.\right)$ where represents the skeleton data to be generated, J represents the position of joint point, and B represents the connection relationship between the joint points.

Further, as shown in Fig. 3, the electronic device 110 may obtain a plurality of surface points 320 of the object by sampling from the three-dimensional mesh data. The plurality of surface points 320 may also be referred to as, for example, a point cloud of the object.

Continuing to refer to Fig. 2, at block 220, the electronic device 110 generates a set of shape units by encoding the plurality of surface points.

As shown in Fig. 3, the electronic device 110 may use a pre-trained shape encoder 330 to encode the plurality of surface points 320 to generate a set of shape units 340. Specifically, the shape encoder 330 may convert the plurality of surface points 320 into a fixed-length feature sequence.

In some scenarios, the shape units 340 are also referred to as shape tokens. The set of shape tokens includes a set of discrete feature representations used to represent a plurality of surfaces. A token is essentially a symbol, which may be used to express a basic unit of a certain type of data.

At block 230, the electronic device 110 provides the set of shape units to a model to generate a set of skeleton units.

As shown in Fig. 3, the electronic device 110 may provide the generated set of shape units 340 to an autoregressive model 350, and a preset identifier <BOS> may be added after the set of shape units 340 to instruct the autoregressive model 350 to start generating the skeleton units 360.

In some scenarios, the skeleton units 360 are also referred to as skeleton tokens. As will be described below, each skeleton token may correspond to a coordinate value of a joint point in a certain dimension.

In some embodiments, the autoregressive model 350 may be implemented based on a transformer model, which may be configured to generate the skeleton units 360 one by one based on an input feature sequence. It would be appreciated that the skeleton units 360 that have been generated may be added to the feature sequence as a condition for generating the next skeleton unit.

In some embodiments, each skeleton unit 360 may correspond to one coordinate value, and three skeleton units 360 may correspond to three coordinate values of three-dimensional coordinates. Accordingly, such three skeleton units 360 may correspond to the coordinates of one joint point. Further, the subsequent three skeleton units 360 may correspond to the coordinates of another joint point, and it may be determined that there is a bone connection between these two adjacent joint points.

That is, the autoregressive model 350 may represent the bone connection of the object by sequentially outputting six skeleton units 360. For example, when there are 100 bone connections in the object, the autoregressive model 360 may sequentially output 600 skeleton units.

In some embodiments, in order to enable the units to accurately express the coordinates of the joint points, the three-dimensional space of the object may be scaled and normalized to a unit cube [-0.5, 0.5]³ in advance. Further, such a unit cube may be mapped to a set of preset spaces. For example, the three-dimensional space of the object may be divided into 128³ discrete spaces in advance. Therefore, the normalized coordinates of each joint point may be mapped to a preset discrete space.

At block 240, the electronic device 110 generates the skeleton data of the object based on the set of skeleton units, the skeleton data indicating the plurality of joint points of the object and the connection relationship between the plurality of joint points.

Specifically, as introduced above, after acquiring six skeleton units 360 continuously generated by the autoregressive model 360, the electronic device 110 may determine first coordinate information of a first joint point based on the first three skeleton units 360, and may determine second coordinate information of a second joint point based on the last three skeleton units 360. Specifically, each skeleton unit 360 may correspond to a coordinate value of one dimension in the three-dimensional coordinates.

Further, the electronic device 110 may construct a connection 370 between the first joint point and the second joint point based on the first coordinate information and the second coordinate information, and then generate the skeleton data 380 of the object. The skeleton data 380 may indicate that there is a connection between the first joint point and the second joint point.

In addition, as discussed above, the unit cube [-0.5, 0.5]³ may be mapped to a set of preset spaces. Accordingly, the electronic device 110 may map the first coordinate information and the second coordinate information to the set of preset spaces based on the mapping relationship. Accordingly, the electronic device 110 may determine, from the set of preset spaces, a first space corresponding to the first coordinate information and a second space corresponding to the second coordinate information. Therefore, the electronic device 110 may convert the generated continuous coordinates into discrete joint points. Accordingly, the electronic device 110 may construct the connection 370 between the first joint point and the second joint point based on the mapped first space and the mapped second space, and then generate the skeleton data 380 of the object.

The training process of the autoregressive model 350 will be further introduced below. In some embodiments, in order to realize that the autoregressive model 350 models the skeleton data serially, in the training and generation process, different bone connections may be ranked according to joint indices. Specifically, the bone connections may be ranked according to a lower joint index in the bone connections. If two bone connections correspond to the same lower joint index, the two bone connections may be ranked according to a higher joint index. Therefore, the model may output skeleton units based on the order of the bone connections. In addition, the joints may be ranked according to their coordinates in space. For example, the joints may be ranked according to the z-axis preferentially, and in the case of the same z-axis, the joints may be ranked according to the y-axis. In addition, in the case of the same z-axis and y-axis, the joints may be ranked according to the x-axis.

Further, in the process of training the autoregressive model 350, the training of the autoregressive model 350 may be supervised based on the cross entropy between the prediction result and the ground truth information. Specifically, the loss may be expressed as: ${L}_{pred} = CE \left(T, \hat{T}\right)$ where T represents a truth unit sequence, T̂ represents a prediction sequence output by the model, and CE represents a cross entropy operation.

In this way, by predicting skeleton units based on shape data, the embodiments of the present disclosure may improve the accuracy and generalization ability of skeleton data generation, making it adaptable to diverse object categories.

Further, the electronic device 110 may further generate weight information based on the shape data 120 of the object and the generated skeleton data 140. The weight information may also be referred to as skinning weight, which may indicate that the weight information is generated based on the shape data and the skeleton data, and the weight information indicates the association relationship between a set of surface points of the object and a set of joint points indicated by the skeleton data.

As an example, the weight information may represent the degree of influence of each joint point corresponding to each surface point, so that how the motion of the joint point affects the motion of the surface point may be determined accordingly.

Accordingly, after determining the weight information, animation associated with the object may be generated based on motion information associated with the skeleton data and the weight information. Specifically, the coordinates of each surface point may be determined based on the motion of the joint point, so as to render the object corresponding to different action states.

In some embodiments, the electronic device 110 may use a functional diffusion model to determine the skinning weight. Specifically, the electronic device 110 may acquire a set of surface points sampled based on the shape data 120 of the object. In some scenarios, the set of sampling points may be the same as the plurality of sampling points used to determine the skeleton data, thereby reducing the calculation cost and storage cost in the prediction process. Alternatively, re-sampling may also be performed based on the shape data 120 of the object to determine a new set of sampling points for determining the skinning weight.

Further, the set of surface points and the set of joint points indicated by the skeleton data may be provided to the function diffusion model to determine a residual weight matrix. Specifically, the processing process of the function diffusion model may be expressed as: *f* : 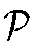 → ( 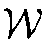 - 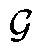 ), where $W ∈ {ℝ}^{v \times n}$ represents the final skinning weight, v represents the number of surface points, n represents the number of joint points, and $G ∈ {ℝ}^{v \times n}$ represents the reference weight matrix. That is, the prediction information output by the function diffusion model is the residual information between the final skinning weight matrix and the reference weight matrix.$G ∈ {ℝ}^{v \times n}$ may represent volumetric geodesic priors. Specifically, the distances, also known as volumetric geodesic distances, between a set of joint points indicated by the skeleton data and a plurality of mesh vertices of the object may be determined. Further, an initial skinning weight, that is, the reference weight matrix $G ∈ {ℝ}^{v \times n}$, may be determined by normalizing the determined volumetric geodesic distances.

In the model prediction process, the final skinning weight matrix, that is, the weight information 140, may be determined based on the sum of the reference weight matrix output by the model and the calculated reference weight matrix.

In the process of training the functional diffusion model, the training loss of the model may be expressed as: ${L}_{denoise} = {\left‖{D}_{θ}\left(\left\{x,{f}_{t}\left(x\right)\right\}, t\right)-{f}_{0}\left(x\right)\right‖}_{2}^{2}$ where *D_{θ}* represents the denoising process of the model, and t represents the denoising time step. *x* represents the input of the model, *fₜ*(*x*) represents the function value at the time step t, and *f*₀(*x*) represents the initial skinning weight function.

In this way, the embodiments of the present disclosure may generate smoothly-transiting skin weights, thereby avoiding the problem of weight discontinuity that may occur in traditional methods. In addition, the embodiments of the present disclosure may also handle complex mesh topologies and different skeleton structures, and have high generalization ability. Further, by introducing the volumetric geodesic priors and global shape features, the accuracy and robustness of the generated skinning weight prediction are further improved.

### Example Apparatus and Device

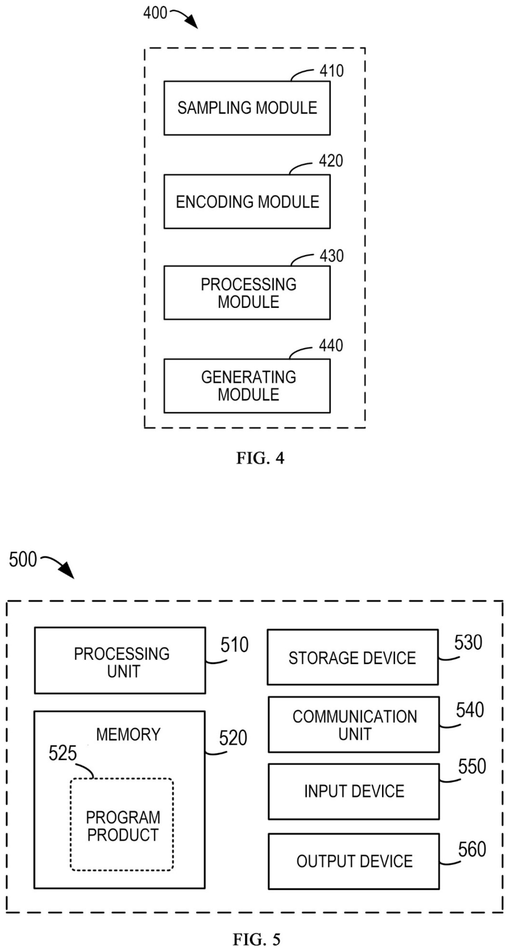

The embodiments of the present disclosure further provide corresponding apparatuses for implementing the above methods or processes. Fig. 4 shows a schematic structural block diagram of an example apparatus 400 for generating skeleton data according to some embodiments of the present disclosure. The apparatus 400 may be implemented as or included in the electronic device 110. Each module/component in the apparatus 400 may be implemented by hardware, software, firmware, or any combination thereof.

As shown in Fig. 4, the apparatus 400 includes a sampling module 410 configured to sample, based on shape data of an object, a plurality of surface points of the object; an encoding module 420 configured to generate a set of shape units by encoding the plurality of surface points; a processing module 430 configured to provide the set of shape units to a model to generate a set of skeleton units; and a generation module 440 configured to generate skeleton data of the object based on the set of skeleton units, the skeleton data indicating a plurality of joint points of the object and a connection relationship between the plurality of joint points.

In some embodiments, the apparatus 400 further includes a data acquisition module configured to: acquire a three-dimensional model of the object; and determine three-dimensional mesh data of the object based on the three-dimensional model, to serve as the shape data of the object.

In some embodiments, the generation module 440 is further configured to: determine first coordinate information of a first joint point and second coordinate information of a second joint point based on the set of skeleton units; and generate the skeleton data of the object based on the first coordinate information and the second coordinate information, the skeleton data indicating that there is a connection between the first joint point and the second joint point.

In some embodiments, the first coordinate information or the second coordinate information includes three-dimensional coordinates indicated by three skeleton units.

In some embodiments, the generation module 440 is further configured to: map the first coordinate information and the second coordinate information to a set of preset spaces to determine a first space corresponding to the first coordinate information and a second space corresponding to the second coordinate information; and generate the skeleton data of the object based on the first space and the second space.

In some embodiments, the model is an autoregressive model configured to generate the skeleton units one by one.

In some embodiments, the apparatus 400 further includes a weight determination module configured to: generate, based on the shape data and the skeleton data, weight information indicating an association relationship between a set of surface points of the object and a set of joint points indicated by the skeleton data.

In some embodiments, the apparatus 400 further includes an animation generation module configured to: generate, based on motion information associated with the skeleton data and the weight information, animation associated with the object.

In some embodiments, the model is a first model, and the weight determination module is further configured to: acquire a set of surface points sampled based on the shape data; provide the set of surface points and the set of joint points indicated by the skeleton data to a second model to determine a residual weight matrix; and generate the weight information based on the residual weight matrix and a reference weight matrix.

In some embodiments, the apparatus 400 further includes a matrix determination module configured to: determine distances between the set of joint points and a plurality of mesh vertices of the object; and determine the reference weight matrix based on the distances.

In some embodiments, the set of surface points is the plurality of surface points.

Fig. 5 shows a block diagram of an electronic device 500 in which one or more embodiments of the present disclosure may be implemented. It would be appreciated that the electronic device 500 shown in Fig. 5 is only illustrative, and should not constitute any limitation on the functions and scope of the embodiments described herein. The electronic device 500 shown in Fig. 5 may be used to implement the electronic device 110 in Fig. 1.

As shown in Fig. 5, the electronic device 500 is in the form of a general electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor, and may perform various processing based on the programs stored in the memory 520. In a multi-processor system, multiple processing units execute computer executable instructions in parallel to improve the parallel processing capability of the electronic device 500.

The electronic device 500 typically includes multiple computer storage medium. Such medium may be any available medium accessible by the electronic device 500, including, but not limited to, volatile and non-volatile medium, and removable and non-removable medium. The memory 520 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 530 may be any removable or non-removable medium, and may include a machine-readable medium such as a flash drive, a disk, or any other medium, which may be used to store information and/or data and may be accessed within the electronic device 500.

The electronic device 500 may further include other removable/non-removable, volatile/non-volatile storage medium. Although not shown in Fig. 5, a disk drive for reading from or writing to a removable, non-volatile disk (for example, a "floppy disk"), and an optical disk drive for reading from or writing to a removable, non-volatile optical disk may be provided. In these cases, each drive may be connected to the bus (not shown) by one or more data medium interfaces. The memory 520 may include a computer program product 525, which has one or more program modules configured to perform various methods or actions in the various embodiments of the present disclosure.

The communication unit 540 realizes communication with other electronic devices through the communication medium. In addition, the functions of the components of the electronic device 500 may be realized with a single computing cluster or multiple computing machines, which may communicate through communication connections. Therefore, the electronic device 500 may use the logical connection with one or more other servers, network personal computers (PCs) or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) such as a storage device, a display device, etc., with one or more devices that enable the user to interact with the electronic device 500, or with any device (e.g., a network card, a modem, etc.) that enables the electronic device 500 to communicate with one or more other electronic devices, as needed, through the communication unit 540. Such communication may be performed via an input/output (I/O) interface (not shown).

According to an illustrative implementation of the present disclosure, a computer-readable storage medium is provided, which has computer-executable instructions stored thereon, and the computer-executable instructions are executed by the processor to implement the method described above. According to an exemplary implementation of the present disclosure, a computer program product is further provided, the computer program product is tangibly stored on a non-transient computer-readable medium and includes computer-executable instructions, and the computer-executable instructions are executed by the processor to implement the method described above.

Various aspects of the present disclosure are described herein with reference to the flowcharts and/or block diagrams of the methods, apparatuses, devices, and computer program products implemented according to the present disclosure. It would be appreciated that each block of the flowcharts and/or block diagrams, and the combination of the blocks in the flowcharts and/or block diagrams may be implemented by computer-readable program instructions.

These computer-readable program instructions may be provided to the processing unit of a general computer, a special computer, or other programmable data processing apparatus to produce a machine, so that these instructions, when executed by the processing unit of the computer or other programmable data processing apparatus, produce an apparatus for implementing the functions/actions specified in one or more blocks in the flowcharts and/or block diagrams. These computer-readable program instructions may also be stored in a computer-readable storage medium, these instructions make the computer, the programmable data processing apparatus, and/or other devices work in a specific way, and the computer-readable medium storing instructions includes a manufactured product, which includes instructions for implementing various aspects of the functions/actions specified in one or more blocks in the flowcharts and/or block diagrams.

The computer-readable program instructions may be loaded onto the computer, other programmable data processing apparatus, or other devices, so that a series of operation steps are performed on the computer, other programmable data processing apparatus, or other devices to produce a computer-implemented process, so that the instructions executed on the computer, other programmable data processing apparatus, or other devices implement the functions/actions specified in one or more blocks in the flowcharts and/or block diagrams.

The flowcharts and block diagrams in the drawings show the architecture, functions, and operations of the system, method, and computer program product that may be implemented according to multiple implementations of the present disclosure. In this regard, each block in the flowchart or block diagram may represent a module, program segment, or part of an instruction, and the module, program segment, or part of an instruction contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or flowchart, and the combination of the blocks in the block diagram and/or flowchart may be implemented with a dedicated hardware-based system that performs specified functions or actions, or may be implemented with a combination of dedicated hardware and computer instructions.

The implementations of the present disclosure have been described above, and the above description is exemplary, non-exhaustive, and not limited to the disclosed implementations. Without departing from the scope of the described implementations, many modifications and changes will be apparent to those of ordinary skill in the art. The terms used herein are intended to best explain the principles, actual applications or improvements of the technology in the market of the implementations, or to enable other ordinary technicians in the art to understand the implementations disclosed herein.

## Claims

1. A method (200) of generating skeleton data, comprising:
sampling (210), based on shape data of an object, a plurality of surface points of the object;
generating (220) a set of shape units by encoding the plurality of surface points;
providing (230) the set of shape units to a model to generate a set of skeleton units; and
generating (240) skeleton data of the object based on the set of skeleton units, the skeleton data indicating a plurality of joint points of the object and a connection relationship between the plurality of joint points.

2. The method (200) of claim 1, further comprising:
acquiring a three-dimensional model of the object; and
determining, based on the three-dimensional model, three-dimensional mesh data of the object to serve as the shape data of the object.

3. The method (200) of claim 1 or 2, wherein generating the skeleton data of the object based on the set of skeleton units comprises:
determining, based on the set of skeleton units, first coordinate information of a first joint point and second coordinate information of a second joint point; and
generating the skeleton data of the object based on the first coordinate information and the second coordinate information, the skeleton data indicating that there is a connection between the first joint point and the second joint point.

4. The method (200) of claim 3, wherein the first coordinate information or the second coordinate information comprises three-dimensional coordinates indicated by three skeleton units.

5. The method (200) of claim 3 or 4, wherein generating the skeleton data of the object based on the first coordinate information and the second coordinate information comprises:
mapping the first coordinate information and the second coordinate information to a set of preset spaces to determine a first space corresponding to the first coordinate information and a second space corresponding to the second coordinate information; and
generating the skeleton data of the object based on the first space and the second space.

6. The method (200) of any of claims 1 to 5, wherein the model is an autoregressive model configured to generate the skeleton units one by one.

7. The method (200) of any of claims 1 to 6, further comprising:
generating, based on the shape data and the skeleton data, weight information indicating an association relationship between a set of surface points of the object and a set of joint points indicated by the skeleton data.

8. The method (200) of claim 7, further comprising:
generating, based on motion information associated with the skeleton data and the weight information, animation associated with the object.

9. The method (200) of claim 7 or 8, wherein the model is a first model, and generating the weight information based on the shape data and the skeleton data comprises:
acquiring the set of surface points sampled based on the shape data;
providing the set of surface points and the set of joint points indicated by the skeleton data to a second model to determine a residual weight matrix; and
generating the weight information based on the residual weight matrix and a reference weight matrix.

10. The method (200) of claim 9, further comprising:
determining distances between the set of joint points and a plurality of mesh vertices of the object; and
determining the reference weight matrix based on the distances.

11. The method (200) of claim 9 or 10, wherein the set of surface points are the plurality of surface points.

12. An apparatus (400) for generating skeleton data, comprising:
a sampling module (410) configured to sample, based on shape data of an object, a plurality of surface points of the object;
an encoding module (420) configured to generate a set of shape units by encoding the plurality of surface points;
a processing module (430) configured to provide the set of shape units to a model to generate a set of skeleton units; and
a generation module (440) configured to generate skeleton data of the object based on the set of skeleton units, the skeleton data indicating a plurality of joint points of the object and a connection relationship between the plurality of joint points.

13. An electronic device (500), comprising:
at least one processing unit (510); and
at least one memory (520) coupled to the at least one processing unit (510) and storing instructions (535) executable by the at least one processing unit (510), the instructions (535), when executed by the at least one processing unit (510), causing the electronic device (500) to perform the method (200) of any of claims 1 to 11.

14. A computer-readable storage medium having a computer program stored thereon, the computer program being executable by a processor to implement the method (200) of any of claims 1 to 11.
